# EUROPEAN PATENT SPECIFICATION

(11) **EP 1 260 076 B1**
(45) Date of publication and mention of the grant of the patent: **08.10.2008**
(21) Application number: 01902939.6
(22) Date of filing: 31.01.2001
(51) Int. Cl.: H04L 29/00, H04M 3/42

(54) **PROCEDURE TO FACILITATE COMMUNICATION BETWEEN PARTICIPANTS ACTING IN NETWORKS THAT UTILIZE DIFFERENT ADMINISTRATIVE AND TECHNICAL PRINCIPLES BY DIVIDING THE INFRASTRUCTURE INTO LOGICAL LAYERS**
VERFAHREN ZUR ERLEICHTERUNG DER KOMMUNIKATION ZWISCHEN VERSCHIEDENE VERWALTUNGSMÄSSIGE UND TECHNISCHE GRUNDSÄTZE VERWENDENDEN NETZEN OPERIERENDEN TEILNEHMERN DURCH AUFTEILUNG DER INFRASTRUKTUR IN LOGISCHE SCHICHTEN
PROCEDURE DESTINEE A FACILITER LA COMMUNICATION ENTRE DES PARTICIPANTS OPERANT DANS DES RESEAUX UTILISANT DIFFERENTS PRINCIPES ADMINISTRATIFS ET TECHNIQUES CONSISTANT A DIVISER L'INFRASTRUCTURE EN COUCHES LOGIQUES

(30) Priority: 31.01.2000 SE 0000301
(43) Date of publication of application: 27.11.2002
(73) Proprietor: TELIASONERA AB, 106 63 Stockholm (SE)
(72) Inventor: HAGBARD, Stefan, S-181 61 Lidingö (SE); ERHULT, Margareta, S-135 49 Haninge (SE)
(74) Representative: Hopfgarten, Nils
(86) International application number: PCT/SE2001/000190
(87) International publication number: WO 2001/056243

(56) References cited:
- EP-A1- 0 944 276
- EP-A2- 0 710 042
- WO-A1-98/28899
- WO-A1-99/34618
- US-A- 5 625 681
- US-A- 5 717 749
- US-A- 5 940 490

## Description

### Technical field

The present invention relates generally to communication networks and specifically to a procedure to facilitate communication between different participants in an infrastructure for communication, which participants act in communication networks which at least partially utilize different administrative and technical principles.

### Technical background

In the telecommunication and data communication networks of today there are many different technologies for managing of the communication. Further, the deregulation of the telecommunication market has resulted in an ever increasing variety of suppliers in the field. These suppliers are to some extent newly established companies, but are also existing companies with existing infrastructures or service offerings which are suitable for implementation of telecommunication and data communication services respectively, by means of telecommunication and data communication services. Examples of such existing companies are companies which have at their disposal networks for distribution of electrical power, railway system networks and companies which offer information services. The different kinds of new suppliers within the field have had greatly different starting positions, which has resulted in systems with different ways of managing data that are utilized at the realization and management of offered services. This partially applies between systems of different suppliers in which communication is made by means of the same technology, but perhaps above all between systems in which communication is made by means of different technologies.

A supplier of a service will, in addition, in many cases need to utilize services of other suppliers at realization and management of the services. A supplier of a mobile telephone service must, for instance, utilize a supplier of an interconnectivity service when a call shall be set up between a customer of the mobile telephone service and a customer of another service, such as a service for fixed telephony. This results in a need of coordination between the different services. Especially the management of data related to participants has to be coordinated between the services. Examples of participants are users, service suppliers, networks, services, data objects etc.

The fact that the different systems, which have been built up for realization and carrying of different services, have different ways of managing data that are utilized at the realization and management of offered services, makes it difficult to satisfy the need of coordination of data between different communication networks and services.

The solutions of today of how coordination of data shall be possible between different systems for realization and carrying of different communication services are to a large extent based on that specific interfaces are introduced between each of the systems between which coordination is needed. A big problem with this type of solutions is that a large number of specific interfaces are needed, which results in poor flexibility and is expensive and complex. For instance there will be problems at introduction of new services or at utilization in a system of services in another system where no interface for coordination of data has been introduced. Further, this solution will give rise to a complex management of participants such as customers and suppliers and of the connection between these, since these are managed each in the interfaces between them. For instance is the same information stored for one and the same participant for each of the services that it utilizes, which results in that this information has to be updated at each supplier each time a change is made.

Further, also centralized suggestions for solution have been presented, in which central databases manage coordination of data between different communication networks. These suggestions for solution partially facilitate updating of participant data but, however, they are strongly directed at the technical coordination of different communication networks, which utilize different communication technologies, such as mobile telephone networks, IP networks, and ATM networks etc. Consequently, the participant data, which are stored centrally in these suggestions for solution, are still strongly connected to the technical systems in which the participants are operating. Changes of data related to connections between two participants can in this suggestion for solution result in that changes of information regarding connections between one of these participants and a third participant have to be made. For instance, participants are identified on basis of the addressing in the communication networks that are utilized at the utilization of a service. In many cases a customer who utilizes a first supplier's service must in his/her turn utilize a second supplier's service for realization of the first supplier's service. For instance must a customer who utilizes an information supplier's service transmit/transfer the information by means of a transfer service. In the suggested centralized solution of today, the connection between the customer and the supplier of the information service is also connected to the supplier of the transfer/transmission service. This results in coordination problems, especially if the customer and the information supplier are connected to different suppliers of the transfer/transmission service.

WO 9828899 discloses systems and methods for managing call processing information, and in particular for facilitating local number portability when requested by an individual or business. Specifically a method is described for providing local number portability services, when changing operator, to a telecommunications system arranged in a Telecommunications Management Network (TMN) framework. The TMN architecture provides a functional hierarchy of logical layered levels, which break down the telecommunications system into operation layers.

### Summary of the invention

The aim of the present invention is to solve the problem that information regarding connection between two participants sometimes must be strongly connected with other participants than these two, which results in coordination problems, and to then facilitate communication between different participants in an infrastructure for communication, which participants act in communication networks which at least partially utilize different administrative and technical principles.

The aim above is achieved by a procedure according to the claim 1, where the infrastructure for communication is divided into a number of logical layers. In each of the logical layers a number of participants are defined and each of the participants in a logical layer is linked to one or more participants in the same or adjacent logical layers. For each of the participants, attributes are defined with regard to the other participants to which these are linked.

By participants are meant physical or logical objects which can act in the communication networks. These participants consequently can be technical equipment or physical/legal persons such as customers/users, service suppliers, networks, support systems etc., but also logical objects such as software in computers etc. Communication networks and communication shall be interpreted in a wide sense and include all types of connections respective information exchange between participants, i.e. connections respective information exchange in a service and within systems for technical and administrative management.

By the participants being defined in the different logical layers, i.e. as separate objects in a logical layer rather than based on the connections they have with other participants, different connections can be defined between a participant and different other participants. These connections can be defined by means of the attributes that are defined with regard to the other participants. For instance is a participant, as a user of a service in the service layer, not directly connected to the technical systems, such as telecommunication networks, in underlying layers that are needed for realization of the service. Further, the linking between participants in a layer consequently can be made without going via links to participants in underlying layers. The coordination that is needed towards underlying layers is managed via the linking to participants in this underlying layer.

The invention consequently is based on the knowledge that it is not sufficient that the managing of participant data between different communication networks are coordinated, either this is made locally between each of the systems, or centrally in an overall system, to overcome the above mentioned problem. Instead, the managing of participants must to a larger extent be released from the specific technical solution and especially a certain part of the management of the connection between customers and service suppliers must be released from the specific technical solution that respective service supplier utilizes in the infrastructure for communication.

The present invention releases the management of participants from the underlying technical solutions of the communication by the way which the connection between participants and addressing is made. According to the invention, a number of logical addresses are defined in each of the logical layers, and the participants in respective logical layers are linked to one or more logical addresses in the logical layer to which they belong.

Logical addresses shall be interpreted in a wide sense and include everything from physical addresses, such as a permanent home address or an address to a port in a computer, to more abstract addresses, such as a logical pointer to one at present used physical address.

By logical addresses being defined and participants being linked to logical addresses in the logical layer to which they belong, rather than connecting participants to addresses which are connected to the technical realization of the services which the participant is utilizing, a participant can have the same logical address in a layer for utilization of different services which are realized by means of underlying layers which have different principles for addressing.

The invention has a number of advantages compared with known technology in addition to the above discussed. Above all, the object-oriented approach to participants and logical addresses in an architecture based on layers results in possibilities for a more consistent and thus more secure and efficient management of participant data. For instance the architecture makes general methods for access and management of participant data of both technical and administrative systems possible. By defining the participants by layers, can for instance situations when a company has different roles in different layers towards other companies be easier managed. For instance can a company be supplier of a service in a service layer, whereas this company is customer in a network layer.

### Brief description of the drawings

The invention will be described in detail in the following with reference to enclosed drawings, in which
Figure 1 schematically shows a division of an infrastructure for communication in a number of logical layers,
Figure 2 schematically shows a system in which an embodiment of the invention is realized, and
Figure 3 shows a flow chart for a procedure according to the invention.

### Description of preferred embodiments

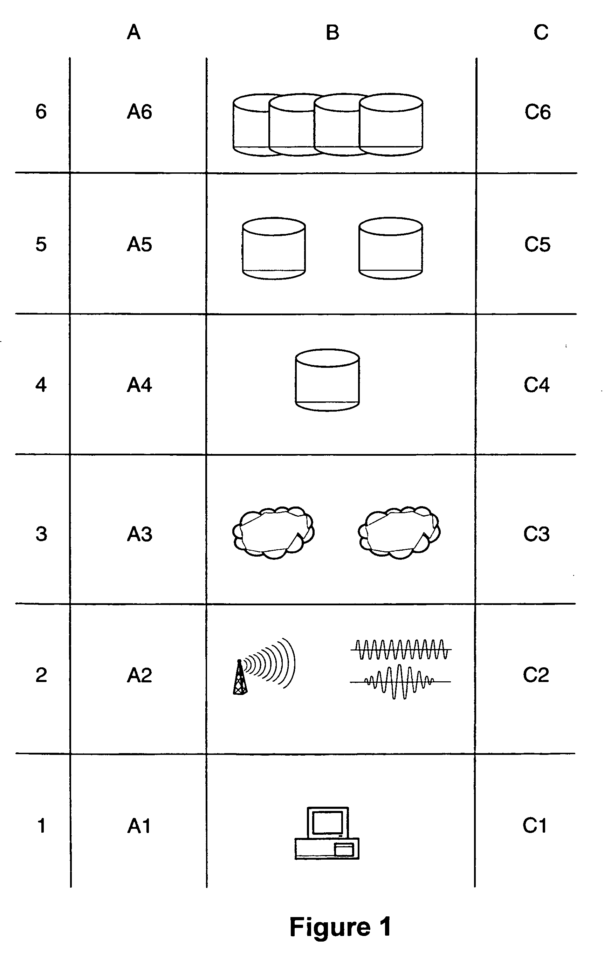

In Figure 1 is shown a division of an infrastructure for communication in a number of logical layers 1-6. The division is in this example made in six layers 1-6 for three different groups/branches A-C which include business architecture A, technical architecture B and information architecture C. Another division into layers and other types of groups/fields can of course be made. At the bottom there is a terminal layer 1 with the physical terminals, such as mobile telephones, exchanges, service servers etc. After this there is a transmission layer 2 with equipment for transmission/transfer, such as optical fibers, radio links etc. The layer above the transmission layer 2 is the network layer 3, in which the different networks are, such as IP-networks, GSM-networks, PSTN-networks etc. Above this layer there is an interconnectivity layer 4, in which the functions for interconnection of different networks are. The interconnection can be made between networks which utilize the same technology and networks which utilize different technologies. After this layer there is a service layer 5, in which different types of services have been realized, which utilize the underlying layers. The services can be information services and communication services etc, such as web-services and telephony. At the top of this division there is a context layer 6 in which tailor-made services are, for instance customer specific applications and profiles. According to the invention then this logical division of layers is utilized at storing, management and exchange of information between different systems and services in and between layers by a number of participants and logical addresses which are connected to these being defined in the different logical layers. Examples of participants are customers/users, operators, service suppliers, information suppliers etc, and examples of logical addresses which are connected to these is an address to a customer to a supplier of a telephone service. The participants are then linked to each other. For instance is a user of a telephone service in the service layer 5 linked to a supplier of the telephone service. A more detailed description is given in the following

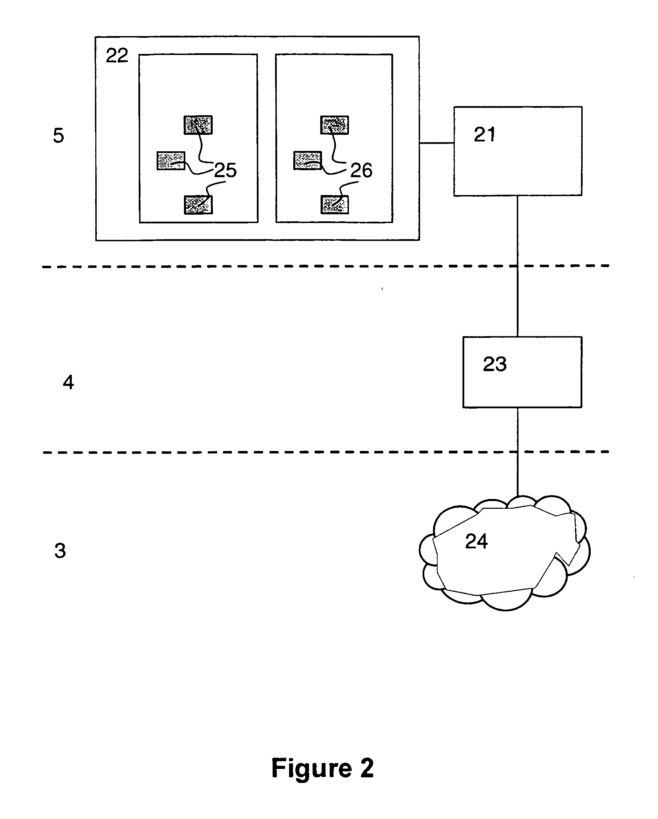

Figure 2 shows schematically a system in which an embodiment of the invention is realized. A service server 21 in a service layer 5 is connected to a database unit 22 and an interconnectivity server 23 in an interconnectivity layer 4 which in its turn is connected to a network 24 in a network layer 3. In the database 22 there are logical addresses 25, participants 26, and links between these stored, such as links between participants 26 and logical addresses 25 and between different participants 26. For the links between the participants 26 there are attributes defined, such.as attributes which describe a level of authorization for the participants 26 with regard to each other. For instance has the service server 21 a logical address in the service layer 5. This logical address is linked to a logical address in the interconnectivity layer 4, which logical address in its turn is linked to a logical address in the network layer 3. Further is the logical address of the service server 21 in the service layer 5 linked to a participant which in this case is the service supplier who supplies the service. In the database 22 there is also links between the participant who supplies the service and other participants, such as users of the service. For these links there is a level of authorization defined which i.a. controls which information to which the different participants are authorized at each other.

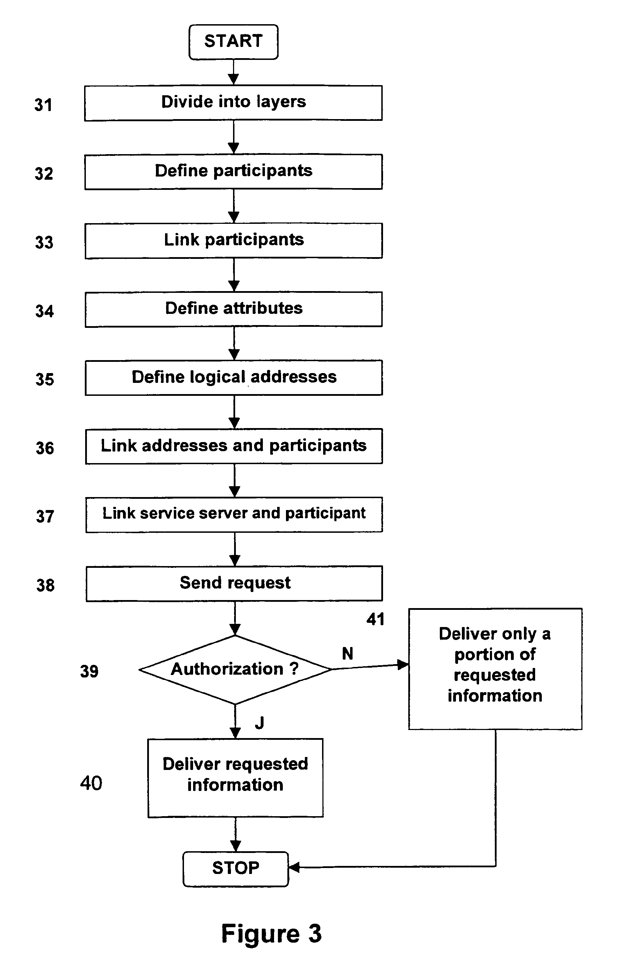

In Figure 3 is shown a flow chart for a procedure according to the invention. In a step 31, the infrastructure for communication is divided into logical layers according to Figure 1. In the steps 32-37 a number of different objects, which are linked to each other and are stored in a database according to Figure 2, are defined. In a step 32 a number of participants, such as a customer and a service supplier, are defined. Each of the participants in the logical layers are then linked, in a step 33, to one or more participants in the same or adjacent logical layer. For instance is the customer linked to the service supplier. Then are in a step 34 a number of attributes for each of the participants defined with regard to the participants to which this is linked. Here is defined an attribute for the service supplier which describes a level of authorization for the service supplier with regard to customer, such as to which information about the customer the service supplier is authorized to have access. Further are defined a number of logical addresses in each of the logical layers in a step 35, at which the participants then are linked in a step 36 to one or more of these logical addresses in the layer to which the participant belongs. In addition is in a step 37 a service server linked to the service supplier according to Figure 2.

In a step 38 is then transmitted from the service server a request for information about the customer to the database. In a step 39 is decided which level of authorization the service supplier, who is linked to the service server, has with regard to the customer. If the service supplier is authorized to all the information that is requested, this information is delivered in a step 40 to the service server, otherwise is delivered in a step 41 only the portion of the requested information to which the service server is authorized.

## Claims

1. Procedure to facilitate communication between different participants in an infrastructure for communication, which participants act in communication networks which at least partially utilize different administrative and technical principles, including the steps
to divide the infrastructure for communication into a number of logical layers,
to define a number of participants in each of the logical layers,
to link each of the participants in a logical layer to one or more participants in the same or adjacent logical layers, and
to define attributes for each of the participants with regard to the other participants to which this is linked,
**characterized by** the steps
to define a number of logical addresses in each of the logical layers,
to link the participants in respective logical layer to one or more logical addresses in the logical layer to which they belong,
to store, for each of the logical layers, the participants, their linking/links and attributes in a separate logical unit in respective logical layer,
to link a first unit (21) in a communication network to a first participant (26),
to transmit from said first unit (21) in said communication network, a request for stored information regarding a second participant to a separate logical unit (22),
to define an attribute for said first participant with regard to said second participant, which describes a level of authorization for the first participant, and
to transmit only that portion of the requested information which corresponds to said level of authorization.

2. Procedure as claimed in claim 1, wherein said request is transmitted via a general protocol for exchange of information.

3. Procedure as claimed in claims 1 or 2, wherein the logical layers include at least two of the following layers,
a terminal layer (1),
a transmission layer (2),
a network layer (3),
an interconnectivity layer (4),
a service layer (5), and
a context layer (6),

4. Procedure as claimed in claim 3, wherein said first unit is a service server (21) and said separate, logical unit a database (22), said service server and said database being located in said service layer (5).

## Patentansprüche

1. Verfahren zum Erleichtern von Kommunikation zwischen unterschiedlichen Teilnehmern in einer Infrastruktur für Kommunikation, welche Teilnehmer in Kommunikationsnetzen handeln, die wenigstens teilweise unterschiedliche Verwaltungsprinzipien und technische Prinzipien verwenden, das die Schritte aufweist
die Infrastruktur für Kommunikation in eine Anzahl von logischen Schichten aufzuteilen,
eine Anzahl von Teilnehmern in jeder der logischen Schichten zu definieren,
jeden der Teilnehmer in einer logischen Schicht zu einem oder mehreren Teilnehmern in derselben oder benachbarten logischen Schichten zu verbinden, und
Attribute für jeden der Teilnehmer in Hinblick auf die anderen Teilnehmer zu definieren, mit denen er verbunden ist,
**gekennzeichnet durch** die Schritte
eine Anzahl von logischen Adressen in jeder der logischen Schichten zu definieren,
die Teilnehmer in entsprechender logischer Schicht mit einer oder mehreren logischen Adressen in der logischen Schicht zu verbinden, zu der sie gehören,
für jede der logischen Schichten die Teilnehmer, ihr Verbinden/ihre Verbindungen und Attribute in einer getrennten logischen Einheit in der entsprechenden logischen Schicht zu speichern,
eine erste Einheit (21) in einem Kommunikationsnetz mit einem ersten Teilnehmer (26) zu verbinden,
von der ersten Einheit. (21) in dem Kommunikationsnetz: eine Anforderung für gespeicherte Information, die einen zweiten Teilnehmer betrifft, zu einer getrennten logischen Einheit (22) zu übertragen,
ein Attribut für den ersten Teilnehmer in Hinblick auf den zweiten Teilnehmer zu definieren, das einen Berechtigungspegel für den ersten Teilnehmer beschreibt, und
nur den Teil der angeforderten Information zu übertragen, der dem Berechtigungspegel entspricht.

2. Verfahren nach Anspruch 1, bei dem die Anforderung über ein allgemeines Protokoll für Austausch von Information übertragen wird.

3. Verfahren nach Anspruch 1 oder 2, bei dem die logischen Schichten wenigstens zwei der folgenden Schichten einschließen,
eine Endgeräteschicht (1)
eine Übertragungsschicht (2)
eine Netzschicht (3)
eine Schicht (4) für Zwischenverknüpfbarkeit oder gegenseitige Verknüpfbarkeit,
eine Dienstschicht (5), und
eine Kontextschicht (6).

4. Verfahren nach Anspruch 3, bei dem die erste Einheit ein Dienstserver (21) und die getrennte logische Einheit eine Datenbank (22) ist, wobei der Dienstserver und die Datenbank in der Dienstschicht (5) angeordnet sind.

## Revendications

1. Procédure pour facilite la communication entre différents participants dans une infrastructure de communication, lesquels participants agissent en réseaux de communication qui utilisent au moins partiellement des principes administratifs et techniques différents, comprenant les étapes consistant à :
Diviser l'infrastructure de communication en un certain nombre de couches logiques,
Définir un certain nombre de participants dans chacune des couches logiques,
Relier chacun des participants dans une couche logique à un ou plusieurs participants dans la même couche logique ou une couche logique adjacente, et
Définir des attributs pour chacun des participants en relation aux autres participants auxquels ceci est relié,
**Caractérisée par** les étapes consistant à
Définir un certain nombre d'adresses logiques dans chacun des couches logiques,
Relier les participants dans une couche logique respective à une ou plusieurs adresses logiques dans la couche logique à laquelle ils appartiennent,
Stocker, pour chacune des couches logiques, les participants, leur liaison/liens et attributs dans une unité logique séparée dans une couche logique respective,
Relier une première unité (21) dans un réseau de communication à un premier participant (26),
Transmettre, depuis ladite première unité (21) dans ledit réseau de communication, une demande d'information stockée concernant un second participant à une seconde unité logique (22),
Définir un attribut pour ledit premier participant en relation avec ledit second participant, qui décrit un niveau pour ledit premier participant, et
Transmettre seulement la partie d'information demandée qui correspond audit niveau d'autorisation.

2. Procédure selon la revendication 1, dans laquelle ladite demande est transmise via un protocole général pour l'échange d'information.

3. Procédure selon les revendications 1 ou 2, dans laquelle les couches logiques incluent au moins deux des couches suivantes,
Une couche terminale (1),
Une couche de transmission (2),
Une couche de réseau (3),
Une couche d'interconnectivité (4),
Une couche de service (5), et
Une couche de contexte (6).

4. Procédure selon la revendication 3, dans laquelle ladite première unité est une serveur de service (21) et ladite unité logique séparée une base de données (22), ledit serveur de service et ladite base de données étant situées dans ladite couche de service (5),
